## Europäisches Patentamt
## European Patent Office
## Office européen des brevets

(19)

(11) Publication number: **0 176 738**
**A1**

(12) # EUROPEAN PATENT APPLICATION

(21) Application number: **85110464.6**

(22) Date of filing: **20.08.85**

(51) Int. Cl.⁴: **F 16 F 9/32**

(30) Priority: **04.10.84 JP 149590/84 U**

(43) Date of publication of application:
**09.04.86 Bulletin 86/15**

(84) Designated Contracting States:
**DE FR GB**

(71) Applicant: **TOYOTA JIDOSHA KABUSHIKI KAISHA**
**1, Toyota-cho Toyota-shi**
**Aichi-ken 471(JP)**

(72) Inventor: **Yokoya, Yuji**
**178-2, Miyuki Honmachi 7-chome**
**Toyota-shi Aichi-ken(JP)**

(74) Representative: **Grams, Klaus Dieter, Dipl.-Ing. et al,**
**Patentanwaltsbüro Tiedtke-Bühling-Kinne-**
**Grupe-Pellmann-Grams-Struif Bavariaring 4**
**D-8000 München 2(DE)**

(54) **Hydraulic buffer.**

(57) A hydraulic buffer (10) comprises partition member (52,62) dividing the interior of a cylinder (12) into two liquid chambers (A,B) while affording communication between both liquid chambers through ports (24,26,64,66) provided in itself and a valve body (32,78) for cooperating with the partition member (52,62). The partition member (52,62) has at least one land (30c, 70b) projecting axially of the cylinder (12) from one end face (28,68) thereof and extending circumferentially to contact the valve body (32,78) and an auxiliary land (54,84) projecting longer than the land from a position of the end face located radially outward of the valve body.

Fig. 4

EP 0 176 738 A1

HYDRAULIC BUFFER

## BACKGROUND OF THE INVENTION

Field of the Invention:

This invention relates to a hydraulic buffer comprising a partition member for dividing the interior of a cylinder into two liquid chambers while affording communication between both liquid chambers through ports and a valve body for cooperating with the partition member.

Description of the Prior Art:

A partition member like a piston disposed in a cylinder or a base valve case disposed on the bottom of an inside cylinder of a so-called twin tube type hydraulic buffer which divides the interior of the cylinder into two liquid chambers while affording communication between both liquid chambers through ports provided in the partition member itself is formed to flow and interrupt liquid in cooperation with a valve body. And to improve the sealing property of the valve body particularly in the interruption of liquid, lands projecting from an end face of the partition member axially of the cylinder and extending circumferentially over the whole periphery are provided radially inward and outward of the ports and the valve body is formed to contact closely the lands ( refer to

**0176738**

the publication of laying-open for public inspection of the Utility Model Application Nos. 138/82 and 139749/82).

In the case of a hydraulic buffer 10 incorporated in a suspension of an automobile, one of the lands may be provided with at least an orifice as shown in the prior art.

An end of a piston rod 16 extends through a piston 14 disposed slidably in a cylinder 12 and a nut 18 is screwed onto the end so that the piston 14 is connected to the piston rod 16. Piston rings 20, 22 are fixed to the outer periphery of the piston 14, and the interior of the cylinder 12 is divided into two liquid chambers A, B which communicate to each other through a plurality of ports 24, 26 (one of respective ports is shown) provided in the piston 14, the ports 24 allowing liquid to flow therethrough in the extension of the piston rod 16 and the port 26 allowing liquid to flow therethrough in the contraction of the piston rod 16.

A first land 30a and a second land 30b project axially from an upper end face 28 of the piston 14 to surround openings of the ports 24 and extend circumferentially over the whole periphery. Further, a third land 30c projects axially from the end face 28 and extends circumferentially over the whole periphery. The second and third lands 30b, 30c surround an opening of the ports 26. Fourth and fifth lands 30d, 30e project axially from a lower end face 29 of the piston 14 to surround lower openings of the port 24 and extend circumferentially over the whole periphery.

The inner periphery of a valve body 32 formed of a leaf spring is fixed to the upper side of the piston 14 to be biased toward the land 30b, 30c by a coned disc spring 34. Also, the inner periphery of a valve body 36 formed of a leaf spring is fixed to the lower side of the piston 14 to be biased toward the land 30e through a spring sheet 38 by a coil spring 40.

The third land 30c is formed with at least an orifice 42 extending radially. This orifice 42 allows liquid to flow even when the valve body 32 contacts closely the land 30c.

The hydraulic buffer 10 is incorporated in a suspension of an automobile for use. When the piston rod 16 moves upward in the travelling of the automobile, liquid in the liquid chamber A flows into the liquid chamber B through the orifice 42 in the land 30c and ports 26 of the piston in the region of low speed to produce a small damping force due to viscous resistance given by the liquid passing through the orifice 42. In the speed which the piston rod 16 is over said region, the liquid in the liquid chamber A overcomes the mounting load of the coil spring 40 to depress downward the valve body 36, spring sheet 38 and coil spring 40, and passes through the ports 24 to flow into the liquid chamber B and produce a large damping force.

SUMMARY OF THE INVENTION

In said hydraulic buffer, the damping force produced when the liquid passes through the orifice may be varied with every hydraulic buffer. One of causes of this dispersion has been found to be flaws in the lands of the piston. That is, when the piston is shifted from a process to another one in the production or when it is washed, the lands are very liable to be flawed often by the contact and collision of pistons with each other and other parts and by the projection of the land from the end face. These flaws, once produced, will make liquid flow when the piston is incorporated in the hydraulic buffer, so that a damping force other than the inherent one produced in the orifice will be produced to disperse the damping force due to the dispersion of the size of flaws on the lands.

The same applies to a base valve case and to a valve body disposed opposed to the land and provided with at least an orifice in place of the land provided with the orifice.

An object of the present invention is to provide a hydraulic buffer which can prevent at least a land of a partition member like a piston or base valve case from being flawed to restrain the dispersion of damping forces.

According to the present invention is provided a hydraulic buffer comprising a partition member for dividing the interior of a cylinder into two liquid chambers while affording communication between both liquid chambers through ports provided in itself and a valve body for cooperating with the partition member. Said partition member has at least one land projecting from one end face thereof axially of said cylinder and extending circumferentially to contact said valve body and an auxiliary land projecting longer than said land from said end face position located radially outward of said valve body.

According to the present invention, only by providing the auxiliary land on the partition member can be economically prevented the land contacting closely the valve body from being flawed. The land may be prevented from being flawed for example by isolating partition members from each other in handling between processes to prevent the land from collision with other parts, arranging the partition members in washing not to collide with each other or washing without so much movement. However, such corrective measures require a lot of labors and high cost so that the improvement on productivity cannot be expected. On the other hand, according to the present invention, the partition member is provided only with the auxiliary land which can be formed in the production process of the partition member, so that the productivity is not substantially affected.

Since the dispersion of the damping force is reduced particularly in the low speed region to reduce the fraction defective of the hydraulic buffer by preventing the land from being flawed, the hydraulic buffer as a whole will be produced economically.

The other objects and features of the present invention will become apparent from the following description of preferred embodiments of the invention with reference to the accompanying drawings.

BRIEF DESCRIPTION OF THE DRAWINGS

Fig. 1 is a sectional view showing the neighborhood of a piston of a hydraulic buffer;

Fig. 2 is a sectional view of the piston;

Fig. 3 is a plan view of the piston showing the upper half;

Fig. 4 is a sectional view showing another embodiment of the piston;

Fig. 5 is a sectional view showing the neighborhood of a base valve of the hydraulic buffe; and

Fig. 6 is a sectional view of the prior art.

-7-

0176738

DESCRIPTION OF THE PREFERRED EMBODIMENTS

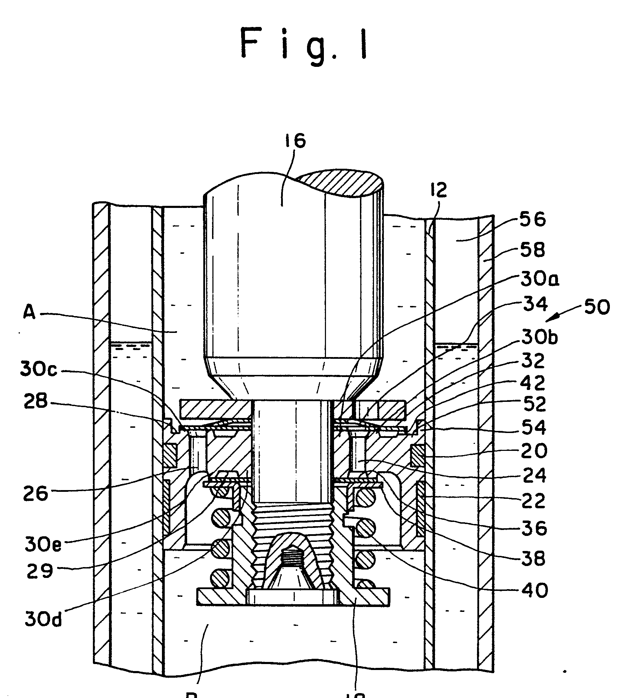

A hydraulic buffer 50 shown in Fig. 1 differs from the hydraulic buffer 10 shown in the Prior Art only in a piston 52. Since the other constitution is as same as that of said buffer 10, same parts are designated by same symbols to omit the detailed description.

To an outer periphery of a piston 52 of partition member of the hydraulic buffer 50 are fixed piston rings 20, 22, and the interior of a cylinder 12 is divided into two liquid chambers A, B by the piston 52. The piston 52 has ports 24 through which liquid flows in the extension of a piston rod 16 and ports 26 through which liquid flows in the contraction of the piston rod 16, both liquid chambers A, B communicating to each other through these ports.

The piston 52 has on one end face 28 lands 30a, 30b and 30c having the same length and on the other end face 29 lands 30d, 30e having the same length. A valve body 32 biased by a coned disc spring 34 contacts closely the lands 30a, 30b and 30c. A valve body 36 biased by a coil spring 40 contacts closely the lands 30d, 30e.

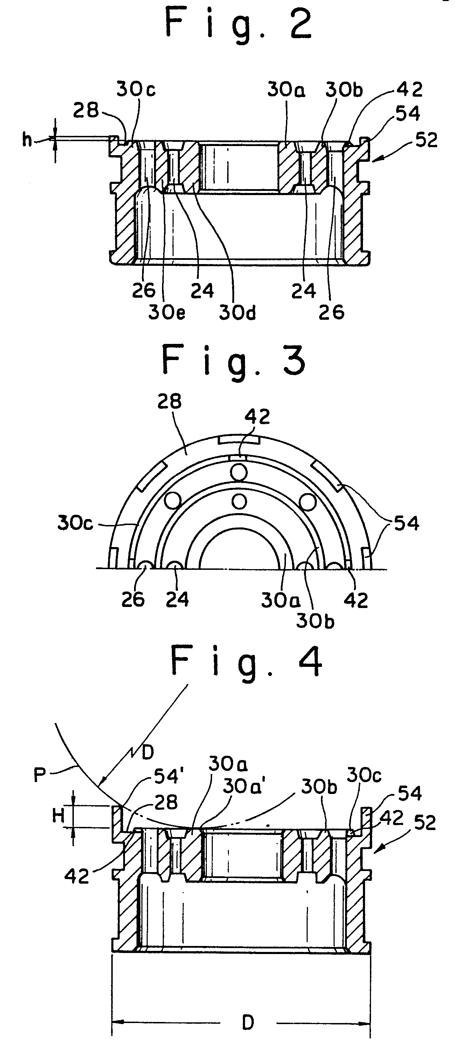

Further, the piston 52 has on the end face 28 an auxiliary land 54 projecting h longer than the lands 30a, 30b and 30c from a position of the end face 28 located radially outward of the valve body 32. The auxiliary land 54 is provided on such a position of the end face as not to interfere with the flow of liquid flowing through an orifice 42. In the embodiment shown in Figs. 2 and 3, the auxiliary land 54 is projected axially from the outer peripheral edge of the end face 28 and extends circumferentially intermittently. The auxiliary land 54 may be formed to extend circumferentially continuously. By this auxiliary land 54 can be remarkably reduced a possibility that the lands 30a, 30b and 30c may make contact or collision with other parts, and these lands can be prevented from being flawed.

The projecting length h of the auxiliary land 54 from the lands 30a, 30b and 30c can be several mms, but more preferably formed as shown in Fig. 4. In this embodiment, the length H of the auxiliary land 54 is larger than the length h of said embodiment and determined by the relationship to the outer diameter D of the piston 52. That is, when an edge 30a' of the land 30a and an edge 54' of the auxiliary land 54 are interconnected by an arc P having the outer diameter D of the piston 52 as diameter, the length H of the auxiliary land 54 is determined such that the land 30b and the land 30c having the orifice 42 are outside the arc P. As a result, if the pistons 52 collide with each other, the lands 30b, 30c can be prevented from being flawed.

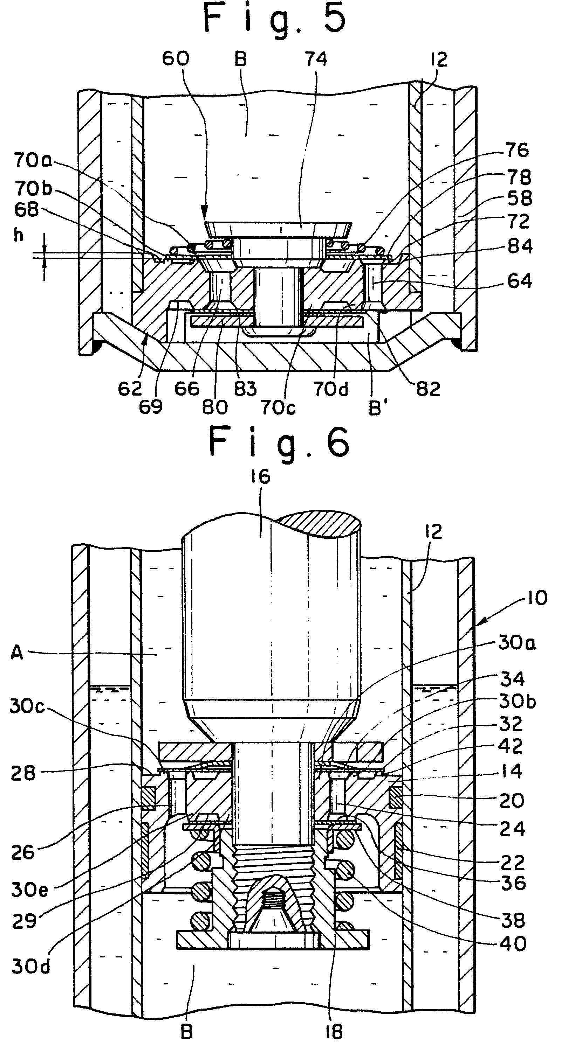

The embodiment of the hydraulic buffer 50 shown in the drawing is of so-called twin tube type in which another cylinder 58 is disposed outside the cylinder 12 at the interval 56. In this hydraulic buffer is incorporated a base valve 60 shown in Fig. 5 on the bottom of the cylinder 12.

The base valve 60 is provided with a base valve case 62 of partition member which is fitted in the cylinder 12. The liquid chamber B defined below the piston 52 in the cylinder 12 is further divided to define an intermediate liquid chamber B' below the base valve case 62. The base valve case 62 has ports 64 (one of them is shown) through which liquid flow in the extension of the piston rod and ports 66 (one of them is shown) through which liquid flow in the contraction of the piston rod, both liquid chambers B, B' communicating to each other through these ports.

The base valve case 62 has on an end face 68 lands 70a, 70b projecting axially therefrom and extending circumferentially over the whole periphery and on an end face 69 lands 70c, 70d projecting axially therefrom and extending circumferentially over the whole periphery. The land 70b is formed with an orifice 72 extending radially.

A guide 74 is caulked fixedly to the base valve case 62 to support movably a valve body 78 biased by a coil spring 76. The valve body 78 contacts closely the lands 70a, 70b. On the other hand, the inner periphery of a valve body 82 formed of a leaf spring and a spacer 83 are sandwiched between a stopper 80 fixed by the guide 74 and the land 70c, and the valve body 82 contacts closely the land 70d.

The base valve case 62 has an auxiliary land 84 on a position of the end face 68 located radially outward of the valve body 78, projecting axially and extending circumferentially. The auxiliary land 84 is formed h longer than the lands 70a, 70b to prevent the lands 70a, 70b from collision and contact with other parts. By forming the length of the auxiliary land 84 according to Fig. 4 is obtained more preferable effect.

The hydraulic buffer may be also of so-called monotube type consisting of a single cylinder in which the partition member is a piston.

In said embodiment, while the orifice is provided in one of lands respectively projecting from the upper end faces of the piston and base valve case, the orifice may be instead provided in the land projecting from the lower end face. In the latter case, an auxiliary land projecting from the lower end face is formed longer than the land. Also, the auxiliary lands may be provided on both end faces.

What is claimed is:

1.    A  hydraulic  buffer  comprising  a  partition member for dividing the interior of a cylinder into two liquid  chambers while affording communication  between both  liquid chambers through ports provided in  itself and  a  valve body for cooperating with  the  partition member  characterized  in  that said  partition  member (52,62)  has  at least one land  (30c,  70b)  projecting axially of said cylinder (12) from one end face (28,68) thereof and extending circumferentially to contact said valve  body  (32,78)  and  an  auxiliary  land  (54,84) projecting  longer  than said land from a  position  of said  end  face located radially outward of said  valve body.

2.    A  hydraulic  buffer  as claimed  in  claim  1, wherein  said  auxiliary land (54,84) projects  several mms longer than said land.

3.    A  hydraulic  buffer  as claimed  in  claim  1, wherein  said auxiliary land (54,84) is formed  circumferentially intermittently.

4.    A  hydraulic  buffer  as claimed'in  claim  1, wherein  said auxiliary land (54,84) is formed  circumferentially continuously.

5.      A hydraulic buffer as claimed in claim 1, wherein said land (30c,70b) has at least an orifice (42,72).

6.      A hydraulic buffer as claimed in claim 1, wherein a first innermost land (30a) and a second land (30c) disposed radially outward of the first land (30a), radially inward of said auxiliary land (54) and having at least an orifice (42) are provided on one end face (28) of said partition member (52) and the projecting length of said auxiliary land (54) is determined such that when edges of the auxiliary land (54) and said first land (30a) are interconnected by an arc (P) having the outer diameter (D) of the partition member (52) as its diameter said second land (30c) is located radially outward of the arc.

7.      A hydraulic buffer of twin tube type comprising an inside cylinder, an outside cylinder spaced from the inside cylinder, a piston dividing the interior of said inside cylinder into two liquid chambers while affording communication between both liquid chambers through ports· provided in itself, a base valve case dividing the liquid chamber below the piston into two liquid chambers while affording communication between both liquid chambers through ports provided in itself and a valve body for cooperating with said piston and base valve case respectively characterized in that said piston (52) and base valve case (62) have respectively at least one land (30c,70b) projecting axially of said inside cylinder (12) from one end face (28,68) thereof and extending circumferentially to contact said valve body (32,78) and an auxiliary land (54,84) projecting longer than said land from a position of said end face located radially outward of said valve body.

8.     A hydraulic buffer of monotube type including a single cylinder comprising a piston dividing the interior of a cylinder into two liquid chambers while affording communication between both liquid chambers through ports provided in itself and a valve body for cooperating with the piston characterized in that said piston (52) has at least one land (30c) projecting axially of said cylinder (12) from one end face (28) thereof and extending circumferentially to contact said valve body (32) and an auxiliary land (54) projecting longer than said land from a position of said end face located radially outward of said valve body.

0176738

# Fig. 1

0176738

# Fig. 2

30c    30a 30b  42
28                        54
                          52
h

26  24        24  26
30e  30d

# Fig. 3

28
            42

30c                        54

26  24        30a    42
            30b

# Fig. 4

D
P        54'  30a
         28  30a'  30b  30c
H                              54
                               42  52
42

D

0176738

# Fig. 5

# Fig. 6

## EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | JP-U-57 000 138<br>* Figure 1 *<br><br>----- | 1 | F 16 F 9/32 |

TECHNICAL FIELDS
SEARCHED (Int. Cl.4)

F 16 F

The present search report has been drawn up for all claims

| Place of search | Date of completion of the search | Examiner |
|---|---|---|
| THE HAGUE | 20-12-1985 | ZERI A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82